(19)

Europäisches
Patentamt
European
Patent Office
Office européen
des brevets

(11) **EP 4 620 591 A1**

(12) **EUROPEAN PATENT APPLICATION**
published in accordance with Art. 153(4) EPC

(43) Date of publication:
**24.09.2025 Bulletin 2025/39**

(21) Application number: **23900283.5**

(22) Date of filing: **20.09.2023**

(51) International Patent Classification (IPC):
***B21D 22/20*** (2006.01)

(52) Cooperative Patent Classification (CPC):
**B21D 22/20; B23K 9/00; B23K 10/02; B23K 11/00; B23K 11/11; B23K 20/10; B23K 20/12; B23K 26/21; F16B 5/08**

(86) International application number:
**PCT/JP2023/034002**

(87) International publication number:
**WO 2024/122158 (13.06.2024 Gazette 2024/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.12.2022 JP 2022194042**

(71) Applicant: **JFE Steel Corporation**
**Tokyo 100-0011 (JP)**

(72) Inventor: **SUMIKAWA Satoshi**
**Tokyo 100-0011 (JP)**

(74) Representative: **Haseltine Lake Kempner LLP**
**One Portwall Square**
**Portwall Lane**
**Bristol BS1 6BH (GB)**

(54) **PRESS MOLDED ARTICLE AND METHOD FOR MANUFACTURING PRESS MOLDED ARTICLE**

(57) Provided are a press-formed product in which a main part and a reinforcing part are joined together and which has good manufacturability while securing excellent collision resistance performance and rigidity, and a production method of this press-formed product. A press-formed product 1 according to the present invention has at least a top plate portion 3 and a vertical wall portion 5, and includes a main part 9 that constitutes the top plate portion 3 and the vertical wall portion 5 and a reinforcing part 11 that is disposed straddling the top plate portion 3 and the vertical wall portion 5 and joined to an inner side or an outer side of the main part 9. The press-formed product 1 is characterized in that: it has a sloping portion 13 of a planar shape between the top plate portion 3 and the vertical wall portion 5 on which the reinforcing part 11 is disposed; a joint 19 is provided at least in the sloping portion 13; and the width of an inner surface of the sloping portion 13 is wider than the width of the joint 19.

[FIG. 1]

(a)  (b)

EP 4 620 591 A1

## Description

Technical Field

The present invention relates to a press-formed product having at least a top plate portion and a vertical wall portion, and relates particularly to a press-formed product including a main part that constitutes the top plate portion and the vertical wall portion and a reinforcing part that is disposed straddling the top plate portion and the vertical wall portion and joined to an inner side or an outer side of the main part, and to a production method of this press-formed product.

Background Art

From the viewpoint of protecting occupants of automobiles, vehicle bodies are desired to be improved in their collision safety. On the other hand, to reduce carbon dioxide emissions, it is also important to reduce the weights of vehicle bodies and improve the fuel efficiency. To make collision safety performance and weight reduction of vehicle bodies compatible with each other, application of high-strength metal materials to framework parts of vehicle bodies has been increasing each year.

For example, pillar parts, such as front pillars and center pillars of an automobile are important parts for protecting occupants inside the cabin in the event of a collision, and are required to have enough strength to withstand collision load. Therefore, high-tensile-strength steel sheets having a tensile strength of 1.5 GPa class or higher are also applied as metal materials. Meanwhile, collision safety standards for automobiles have been becoming increasingly stringent, and to meet such standards, a layered structure in which a reinforcing part is newly added to a framework part needing strength to thereby partially reinforce portions of the vehicle body has been adopted for the aforementioned pillar parts etc.

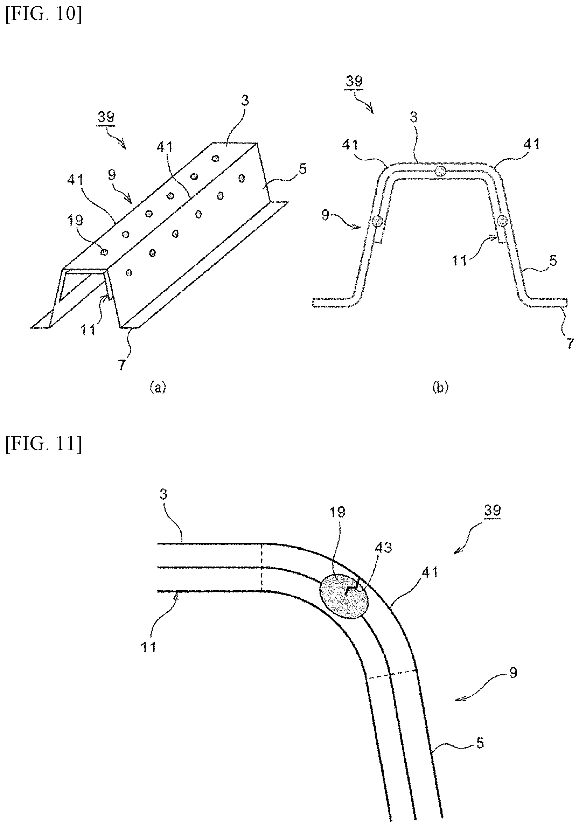

Fig. 10 shows one example of a conventional press-formed product 39 having the layered structure. As in the schematic view shown in Fig. 10, the conventional press-formed product 39 having the layered structure is composed of a main part 9 and a reinforcing part 11 joined to the main part 9. The main part 9 has a hat-shaped cross-section, and has a top plate portion 3, vertical wall portions 5, flange portions 7, and ridge portions 41 that are curved portions connecting the top plate portion 3 and the vertical wall portions 5 to each other. The reinforcing part 11 is disposed on an inner side of the main part 9 so as to straddle the top plate portion 3 and the vertical wall portions 5 and joined to the main part 9. In the conventional press-formed product 39, joints 19 between the main part 9 and the reinforcing part 11 are provided in planar portions of the top plate portion 3 and the vertical wall portions 5.

On the other hand, Patent Literature 1 discloses a "formed member" in which welds are provided at ridge portions. According to Patent Literature 1, by providing the welds for a reinforcing member at the ridge portions that are curved portions with a small radius of curvature, a formed member suitably used as an automotive constituent member can be obtained that has axial crushing characteristics, three-point bending characteristics, or excellent bending rigidity and torsional rigidity.

Citation List

Patent Literature

Patent Literature 1: JP-A-2014-87848

Summary of Invention

Technical Problem

As described above, providing joints in the ridge portions can improve the collision resistant properties of automotive parts. However, providing joints in the ridge portions raises the following problems during production. In the following, two examples of production methods will be presented and problems in each of these production methods will be described.

A first production method is a method in which the main part 9 and the reinforcing part 11 are each press-formed, and the press-formed main part 9 and reinforcing part 11 are placed one on top of the other and joined together at the ridge portions 41. In this method, a joining machine interferes with the main part 9 and the reinforcing part 11, so that it has not always been possible to form the joints 19 in the ridge portions 41 that are desired positions. Even if the joining machine does not interfere, since the ridge portions 41 have an R-shape with a small radius of curvature, electrodes fail to sufficiently come into contact with the parts, resulting in joining failure. In addition, contact failure occurs due to the difficulty of matching the shape of the joint surface of the main part 9 and the shape of the joint surface of the reinforcing part 11, so that it has not always been possible to sufficiently join these parts together.

A second production method is a method in which, as described also in claim 10 of Patent Literature 1, the main part 9 and the reinforcing part 11 are joined together in a state of blanks before being press-formed, and then the joined two blanks are press-formed as one body. In this method, since the parts are joined together in the state of flat plate-shaped blanks, interference of a joining machine or joining failure due to contact failure between the joining machine and the parts and between the parts as in the first production method does not occur. However, one problem is that, since the blanks are joined together at portions corresponding to the ridge portions 41 and then bent at these portions, the joints 19 undergo severe bending deformation, which results in a crack 43 in an outer surface of the ridge portion 41 (see Fig. 11).

The present invention, which solves the above-described problems, aims to provide a press-formed product in which a main part and a reinforcing part are joined together and which is free of cracks at joints while securing excellent collision resistance performance and rigidity, and a production method of this press-formed product.

Solution to Problem

The present invention makes it possible to produce a press-formed product having excellent collision resistance performance and rigidity by preventing interference between a joining machine and the press-formed product, sufficiently securing contact between electrodes and parts and between the parts, and allowing favorable joining free of cracks, and has the following configurations.

(1) A press-formed product according to the present invention has at least a top plate portion and a vertical wall portion, and includes a main part that constitutes the top plate portion and the vertical wall portion and a reinforcing part that is disposed straddling the top plate portion and the vertical wall portion and joined to an inner side or an outer side of the main part. The press-formed product is characterized in that: it has a sloping portion of a planar shape between the top plate portion and the vertical wall portion on which the reinforcing part is disposed; a joint is provided at least in the sloping portion; and a width of an inner surface of the sloping portion is wider than a width of the joint.

(2) A press-formed product according to the present invention has at least a top plate portion and a vertical wall portion, and includes a main part that constitutes the top plate portion and the vertical wall portion and a reinforcing part that is disposed straddling the top plate portion and the vertical wall portion and joined to an inner side or an outer side of the main part. The press-formed product is characterized in that: it has a curved sloping portion between the top plate portion and the vertical wall portion on which the reinforcing part is disposed; a joint is provided at least in the sloping portion; a width of an inner surface of the sloping portion is wider than a width of the joint; and a cross-sectional radius of curvature of the inner surface of the sloping portion is larger than a cross-sectional radius of curvature of a ridge portion between the top plate portion and the sloping portion and a cross-sectional radius of curvature of a ridge portion between the sloping portion and the vertical wall portion, and is 20 mm or larger.

(3) A press-formed product according to the present invention is characterized in that, in the press-formed product according to (1) or (2) described above, the joint is formed by spot welding, arc welding, laser welding, seam welding, plasma welding, friction stir joining, or ultrasonic joining.

(4) A production method of a press-formed product according to the present invention is characterized in that: a flat plate-shaped blank to become a main part and a flat plate-shaped blank to become a reinforcing part are placed one on top of the other and joined together at least at a portion corresponding to the sloping portion to form a joined blank; and the joined blank is press-formed to produce the press-formed product according to any one of (1) to (3) described above.

(5) A press-formed product according to the present invention is characterized in that, in the press-formed product according to any one of (1) to (3) described above, the main part and the reinforcing part are obtained by press-forming steel sheets having a tensile strength of 980 MPa class or higher.

(6) A production method of a press-formed product according to the present invention is characterized in that, in the production method according to (4) described above, the blanks of the main part and the reinforcing part are steel sheets having a tensile strength of 980 MPa class or higher.

Advantageous Effects of Invention

In the present invention, the press-formed product has the sloping portion between the top plate portion and the vertical wall portion and the joint is provided in this sloping portion, which makes it possible to produce the press-formed product so as to prevent joining failure while securing excellent collision resistance performance and rigidity.

That is, in the case of the production method in which the main part and the reinforcing part are each press-formed and then the two parts are joined together, it is possible to secure sufficient contact between electrodes and the parts and between the parts and allow favorable joining.

In the case of the production method in which two blanks are joined together and then the joined two blanks are press-formed, bending deformation occurring at the joint can be reduced to prevent cracks.

Brief Description of Drawings

[Fig. 1] Figs. 1 (a) and (b) are a perspective view and a sectional view of a press-formed product according to one embodiment of the present invention.

[Fig. 2] Fig. 2 is an enlarged view of the part enclosed by the dashed line circle in Fig. 1 (b), and is a view for describing a sloping portion.

[Fig. 3] Fig. 3 is a view for describing another aspect of the sloping portion.

[Fig. 4] Figs. 4 (a) and (b) are a perspective view and a sectional view for describing another aspect of joints.

[Fig. 5] Figs. 5 (a) to (d) are views for describing a production method of the press-formed product of Fig. 1.

[Fig. 6] Figs. 6 (a) and (b) are a perspective view and a sectional view of a press-formed product according to Another Embodiment 1 of the present invention.

[Fig. 7] Figs. 7 (a) and (b) are a perspective view and a sectional view of a press-formed product according to Another Embodiment 2 of the present invention.

[Fig. 8] Figs. 8 (a) and (b) are a perspective view and a sectional view of a press-formed product according to Another Embodiment 3 of the present invention.

[Fig. 9] Figs. 9 (a), (b), and (c) are a perspective view, a sectional view, and a side view of press-formed products according to Example and Comparative Example similar to the embodiment of Fig. 1.

[Fig. 10] Figs. 10 (a) and (b) are a perspective view and a sectional view of a conventional press-formed product.

[Fig. 11] Fig. 11 is a view for describing problems with the conventional press-formed product.

Description of Embodiment

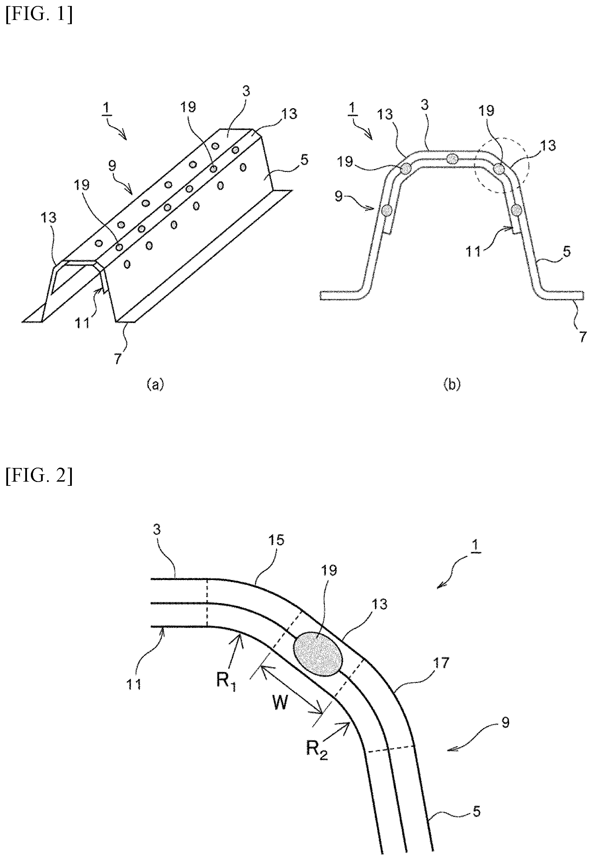

A press-formed product 1 according to one embodiment of the present invention has a layered structure in which, as one example is shown in Fig. 1, a main part 9 with a hat-shaped cross-section having a top plate portion 3, sloping portions 13, vertical wall portions 5, and flange portions 7, and a reinforcing part 11 of a shape conforming to an inner surface of the main part 9 are joined together. The reinforcing part 11 is a part that reinforces the main part 9, and is disposed straddling the top plate portion 3 and the vertical wall portions 5 and joined to an inner side of the main part 9 by spot welding.

The press-formed product 1 of the embodiment has the sloping portions 13 of a planar shape between the top plate portion 3 and the vertical wall portions 5. The sloping portions 13 that are a feature of the present invention will be described in detail below using Fig. 2. Fig. 2 is an enlarged view of the part enclosed by the dashed line circle in Fig. 1 (b). As shown in Fig. 2, the sloping portion 13 of the main part 9 continues to the top plate portion 3 through a ridge portion 15 and continues to the vertical wall portion 5 through a ridge portion 17. The ridge portion 15 and the ridge portion 17 are curved portions that connect the top plate portion 3 or the vertical wall portion 5 to the sloping portion 13. Therefore, the reinforcing part 11 that is of a shape conforming to the main part 9 has a shape corresponding to the top plate portion 3, the ridge portion 15, the sloping portion 13, the ridge portion 17, and the vertical wall portion 5. A width W of the sloping portion 13 is wider than that of a joint 19, to be described later, such that the joint 19 is contained inside the sloping portion 13 without protruding to the ridge portion 15 or the ridge portion 17.

The reinforcing part 11 is joined to the main part 9 by the joints 19 provided in the sloping portions 13. The joints 19 are formed by, for example, spot welding, and are provided in an extension direction of the sloping portions 13 as shown in Fig. 1 (a). Similar joints 19 are also provided in the top plate portion 3 and the vertical wall portions 5. It is not essential in the present invention to provide the joints 19 in the top plate portion 3 and the vertical wall portions 5, and the joints 19 may be provided in only the sloping portions 13.

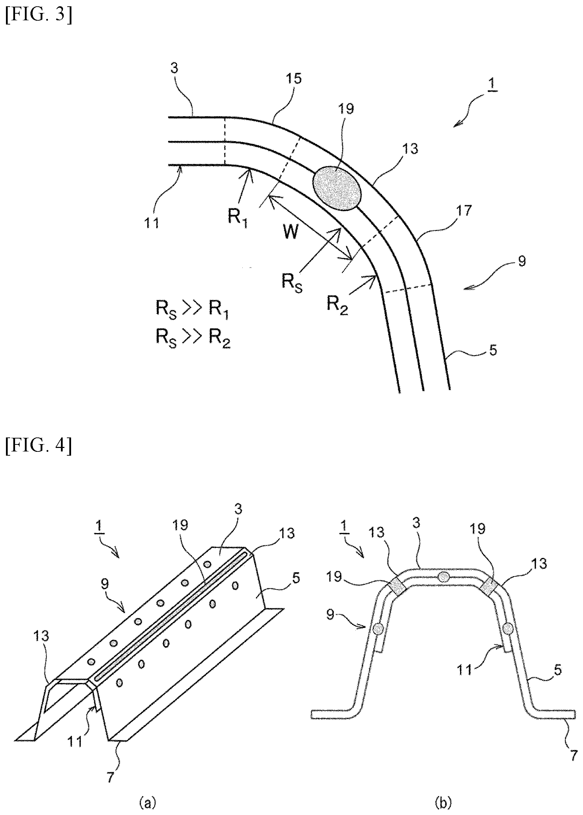

The sloping portions of the present invention are not limited to planar ones as shown in Fig. 2, and may have a gently curved shape in cross-section as shown in Fig. 3. Also in this case, the width W of the sloping portion 13 should be wider than that of the joint 19 such that the joint 19 is contained inside the sloping portion 13 without protruding to the ridge portion 15 or the ridge portion 17. In the case where the sloping portion 13 has a curved shape, the width length of the sloping portion 13 differs between an inner surface and an outer surface thereof. Therefore, the width at a portion at which the width length is shortest, i.e., the width on the inner surface of the sloping portion 13 corresponds to the width W in the present invention.

When a cross-sectional radius of curvature of the curved sloping portion 13 on an inner side of the bend is $R_S$, and the cross-sectional radii of curvature of the ridge portion 15 and the ridge portion 17 on inner sides of the bends are $R_1$ and $R_2$, respectively, the relationship among $R_S$, $R_1$, and $R_2$ are as follows:

$$R_S \gg R_1, \; R_S \gg R_2 \cdots (1)$$

Generally, the cross-sectional radius of curvature of the ridge portion 15 or the ridge portion 17 is about 3 to 6 mm and does not exceed 10 mm at a maximum. On the other hand, in the present invention, it is preferable that the cross-sectional radius of curvature $R_S$ of the sloping portion be larger than the cross-sectional radius of curvature $R_1$ and the cross-sectional radius of curvature $R_2$ and 20 mm or larger. The reason for setting the cross-sectional radius of curvature $R_S$ to 20 mm or larger will be specifically described in Examples to be described later.

The joints 19 are not limited to those intermittently provided by spot welding as in Fig. 1 (a), and may be continuously provided in the extension direction of the sloping portion 13 as in Fig. 4 (a) by arc welding, laser welding, seam welding, plasma welding, friction stir joining, ultrasonic joining, etc. The joints 19 may be formed at an interface between the main part 9 and the reinforcing part 11 as in Fig. 1 (b), or may be formed from an outer surface of the main part 9 to an inner surface of the reinforcing part 11 as in Fig. 4 (b).

Having the sloping portions 13 of a planar shape or a gently curved shape between the top plate portion 3 and the vertical wall portions 5, the press-formed product 1 configured as has been described above can solve the problems in manufacturing that have hitherto arisen when performing joining at the ridge portions having a small radius of curvature between the top plate portion 3 and the vertical wall portions 5. This will be specifically described in the following description of a production method of the press-formed product 1.

<Production method of Press-formed product>

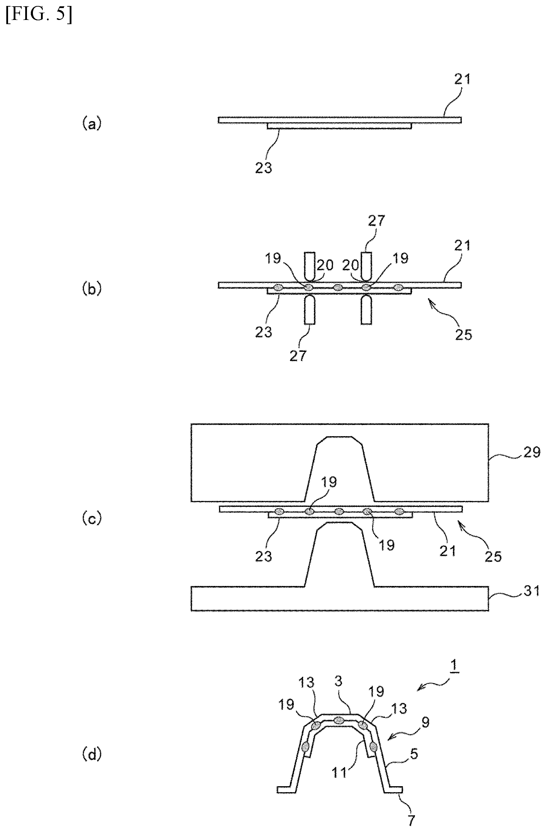

One example of the production method of the press-formed product 1 of the embodiment will be described based on Fig. 5. First, as shown in Fig. 5 (a), a flat plate-shaped blank 21 to be formed into the main part 9 and a flat plate-shaped blank 23 to be formed into the reinforcing part 11 are set in a state of one being placed on top of the other.

Next, as shown in Fig. 5 (b), the blanks 21, 23 are joined together at least at areas 20 corresponding to the sloping portions 13 (corresponding-to-sloping-portion areas 20) to produce a joined blank 25. As necessary, joining is performed also at areas corresponding to the top plate portion 3 and the vertical wall portions 5. As the joining method here, for example, spot welding, seam welding, laser welding, plasma welding, friction stir joining, ultrasonic joining, etc. can be used as described above. Fig. 5 (b) shows an example of spot welding using electrodes 27.

As the main part 9 and the reinforcing part 11 are thus joined together beforehand in the state of flat plate-shaped blanks, compared with when press-forming each of the parts and then joining them together, a favorable contact state between the electrodes 27 and the parts can be secured and joining failure is less likely to occur. In addition, a gap is less likely to form between the press-formed main part 9 and reinforcing part 11, and a contact state between the parts is also favorable.

After the joined blank 25 is produced, as shown in Fig. 5 (c), the joined blank 25 is press-formed by dies (a die 29, a punch 31) of a shape corresponding to a target shape to obtain the press-formed product 1 shown in Fig. 5 (d).

In the case of the conventional press-formed product in which joining is performed at ridge portions 41 having a small cross-sectional radius of curvature as described in Patent Literature 1, significant bending deformation occurs at the joints 19 during press forming and a crack 43 occurs on the outer side of the bend (see Fig. 11). In this respect, in the press-formed product 1 of the embodiment, since the sloping portions 13 of a planar shape or a gently curved shape are provided at portions corresponding to the conventional ridge portions 41 and joining is performed at the sloping portions 13, no significant bending deformation occurs at the joints 19 and cracks can be inhibited. Thus, the press-formed product 1 in which the main part 9 and the reinforcing part 11 are placed one on top of the other can be produced so as to prevent cracks at the joints, and the press-formed product 1 having excellent collision resistance performance and rigidity can be produced.

Since the ridge portion 15 and the ridge portion 17 shown in Fig. 2 have small cross-sectional radii of curvature, cracks are likely to occur when the joints 19 extend to these portions. Therefore, it is necessary in Fig. 5 (b) to set the width W of the corresponding-to-sloping-portion area 20 to be wider than the width of the joint 19, and to form the joint 19 inside the corresponding-to-sloping-portion area 20.

Press forming of the press-formed product 1 is not limited to one step, and multiple steps may be gone through to obtain the press-formed product 1 of the target shape. Press forming of the joined blank 25 may be bending as in Fig. 5 (c) or may be drawing using a blank holder.

While the above is the production method in the case where the main part 9 and the reinforcing part 11 are joined together in the state of blanks before being press-formed, the press-formed product 1 of the embodiment can also be applied in the case of a production method in which the main part 9 and the reinforcing part 11 are each press-formed and then joined together. For example, in the case of the conventional press-formed product without the sloping portions 13, since joining is performed at the ridge portions 41 that are curved with a small radius of curvature, contact between the electrodes 27 and the parts and contact between the parts cannot be sufficiently secured, which results in joining failure. In the press-formed product 1 of the embodiment, however, since the parts are joined together at the sloping portions 13 that have a planar or gently curved shape, contact between the electrodes 27 and the parts and contact between the parts can be sufficiently secured and joining failure is less likely to occur.

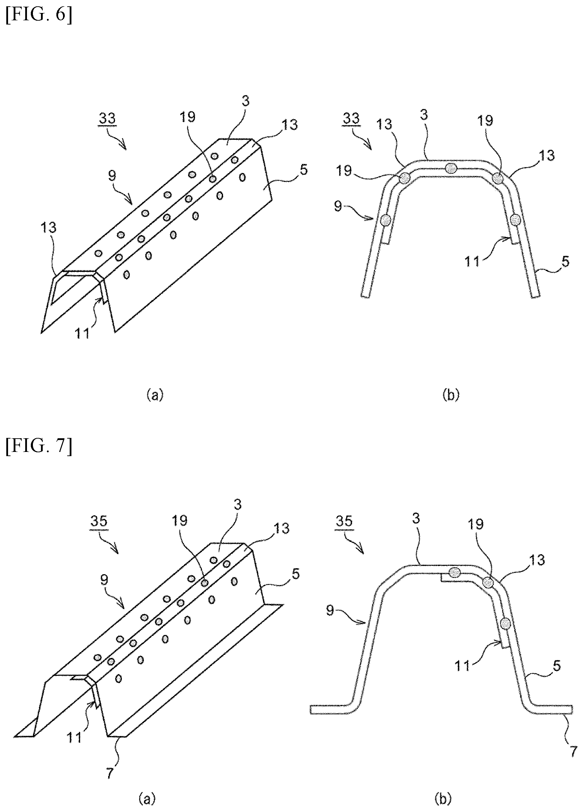

The press-formed product intended by the present invention is not limited to one in which the main part 9 has a hat-shaped cross-section, and may be one in which the main part 9 has a U-shaped cross-section as in a press-formed product 33 according to Another Embodiment 1 shown in Fig. 6. As in a press-formed product 35 according to Another Embodiment 2 shown in Fig. 7, the press-formed product may include a reinforcing part 11 with a L-shaped cross-section that is disposed straddling the top plate portion 3 and the vertical wall portion 5 on one side.

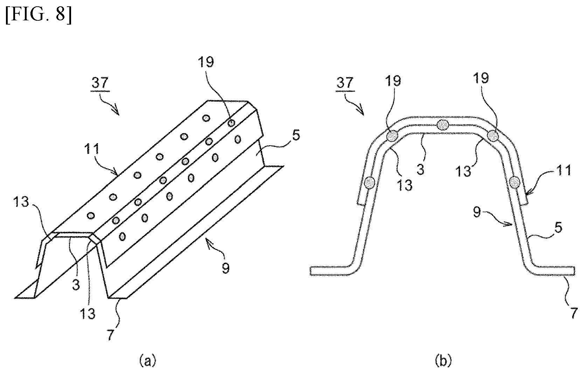

Further, the press-formed product intended by the present invention is not limited to one in which the reinforcing part 11 is disposed on the inner side of the main part 9, and may be one in which the reinforcing part 11 is disposed on the outer side of the main part 9 as in a press-formed product 37 according to Another Embodiment 3 shown in Fig. 8. In any case, to facilitate releasing from the dies after press forming, an internal angle between the top plate portion 3 and the vertical wall portion 5 should be 90° or larger.

Examples

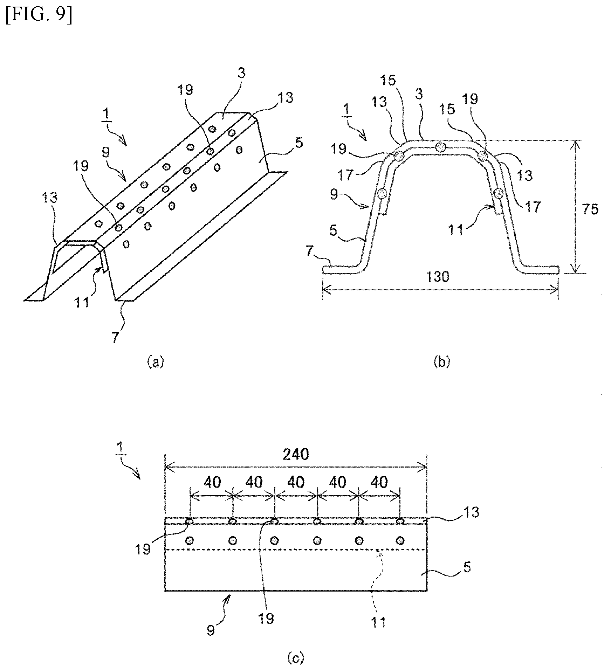

To confirm the operational advantages of the present invention, specific press forming was performed, which will be described below. The target shape in this Example will be described using Fig. 9. Fig. 9 is one example of the target shape in Invention Example (Example) and Comparative Example to be described later. The press-formed product 1 shown in Fig. 9 is the same one as in the embodiment of Fig. 1, and therefore the same reference signs as in Fig. 1 are indicated. As shown in Fig. 9, in this Example, press forming was performed with the press-formed product 1 as the target shape in which the main part 9 having a hat-shaped cross-section and the reinforcing part 11 having a U-shaped cross-section and disposed on the inner side of the main part 9 were joined together.

As Invention Example (Example) and Comparative Example, as shown in Fig. 9 (c), the press-formed product 1 of the target shape had a length of 240 mm, a height of 75 mm, a width of 130 mm, and an internal angle formed by the top plate portion 3 and the vertical wall portion 5 of 100°. Joining was spot joining, and with the width of the joint (nugget diameter) set to 5 mm, joining was performed at the top plate portion 3, the vertical wall portions 5, and the sloping portions 13 at 40 mm intervals in the longitudinal direction of the press-formed product. For the blank that was the material of the main part 9, a 1.4 mm-thick steel sheet of 1180 MPa class was used, and as the blank that was the material of the reinforcing part 11, a 1.4 mm-thick steel sheet of 1470 MPa class was used.

As Conventional Example, a press-formed product 39 shown in Fig. 10 and Fig. 11 was also press-formed in which spot welding was performed at the R-shaped ridge portions 41 connecting the top plate portion 3 and the vertical wall portions 5 to each other, the top plate portion 3, and the vertical wall portions 5. The cross-sectional radius of curvature (the cross-sectional radius of curvature on the inner side of the bend) of the ridge portion 41 in Conventional Example was 6 mm.

In Invention Example (Example) and Comparative Example, the cross-sectional radius of curvature $R_1$ of the ridge portion 15 and the cross-sectional radius of curvature $R_2$ of the ridge portion 17 were each 6 mm as with the ridge portion 41 of Conventional Example. In Invention Example and Comparative Example, press forming was performed not only for the case where the sloping portions 13 were planar but also for the case where the sloping portions 13 were curved, with the cross-sectional radius of curvature $R_S$ of the curved sloping portions 13 and the width W of the sloping portions 13 being varied.

Press forming of Conventional Example, Comparative Example, and Invention Example was performed by the production method in accordance with Fig. 5. Specifically, the blank 21 and the blank 23 were placed one on top of the other and spot-welded at areas corresponding to the top plate portion 3 and the vertical wall portions 5. In Invention Example and Comparative Example, spot welding was performed at areas corresponding to the sloping portions 13, and in Conventional Example, spot welding was performed at areas corresponding to the ridge portions 41, to produce the joined blank 25. Thereafter, the joined blank 25 was press-formed by dies corresponding to the target shape to obtain a target press-formed product. Then, the joints 19 between the press-formed main part 9 and reinforcing part 11, particularly the joints 19 at the portions connecting the top plate portion 3 and the vertical wall portions 5 to each other (the sloping portions 13 or the ridge portions 41) were visually observed for cracks. The result is shown in Table 1.

[Table 1]

| No. | Width (mm) of joint | Sloping portion | | | Cross-sectional radii of curvature of ridge portions | | | Cracks at welds | Remarks |
|---|---|---|---|---|---|---|---|---|---|
| | | Shape | Width W (mm) | Cross-sectional radius of curvature Rs (mm) | Ridge portion 41(mm) | Ridge portion 15 $R_1$ (mm) | Ridge portion 17 $R_2$ (mm) | | |
| 1 | 5 | - | - | - | 6 | - | - | Present | Conventional Example |
| 2 | 5 | Curved | 3 | 10 | - | 6 | 6 | Present | Comparative Example |
| 3 | 5 | Curved | 3 | 30 | - | 6 | 6 | Present | Comparative Example |
| 4 | 5 | Planar | 3 | ∞ | - | 6 | 6 | Present | Comparative Example |
| 5 | 5 | Curved | 7 | 10 | - | 6 | 6 | Present | Comparative Example |
| 6 | 5 | Curved | 7 | 20 | - | 6 | 6 | Absent | Invention Example |
| 7 | 5 | Curved | 7 | 30 | - | 6 | 6 | Absent | Invention Example |
| 8 | 5 | Planar | 7 | ∞ | - | 6 | 6 | Absent | Invention Example |

No. 1 that is Conventional Example only has the R-shaped ridge portions 41 between the top plate portion 3 and the vertical wall portions 5 (see Fig. 11). When joining was performed at the ridge portions 41 having a cross-sectional radius of curvature of 6 mm, the joints 19 at the ridge portions 41 after press forming had cracks.

No. 2 and No. 3 that are Comparative Examples have the curved sloping portions 13 between the top plate portion 3 and the vertical wall portions 5 (see Fig. 3), and the width W of the sloping portion 13 is 3 mm and thus narrower than the width of the joint (5 mm). No. 4 that is Comparative Example has the sloping portions 13 of a planar shape between the top plate portion 3 and the vertical wall portions 5 (see Fig. 2), and the width W of the sloping portion 13 is narrower than the width of the joint as with No. 2 and No. 3. In No. 2 to No. 4, as the joints 19 protruded from the sloping portions 13 and extended to the ridge portion 15 or the ridge portion 17 having a cross-sectional radius of curvature of 6 mm, cracks occurred at the joints 19 regardless of the shape of the sloping portions 13.

In No. 5 that is Comparative Example, the width W of the sloping portion 13 is 7 mm and thus wider than the width of the joint 19 (5 mm), while the cross-sectional radius of curvature $R_S$ of the sloping portion 13 is 10 mm and thus smaller than 20 mm in the present invention. Also in this case, due to the small cross-sectional radius of curvature $R_S$ of the sloping portion 13, cracks occurred at the joints 19.

By contrast, in No. 6 and No. 7 that are Examples of Invention, the width W of the sloping portion 13 is wider than the width of the joint 19 and the cross-sectional radius of curvature $R_S$ of the sloping portion 13 is 20 mm or larger. No. 8 that is Invention Example has the sloping portions 13 of a planar shape between the top plate portion 3 and the vertical wall portions 5 (see Fig. 2), and the width W of the sloping portion 13 is wider than the width of the joint 19. In Examples of Invention (Examples) No. 6 to No. 8, no cracks occurred at the joints 19.

As has been described above, Examples confirmed that providing the sloping portions 13 of a planar shape or the curved sloping portions 13 having a cross-sectional radius of curvature of 20 mm or larger, and providing the joints 19 so as to be contained inside the sloping portions 13, could prevent cracks at the joints 19 between the main part 9 and the reinforcing part 11.

Reference Signs List

1: press-formed product
3: top plate portion
5: vertical wall portion
7: flange portion
9: main part
11: reinforcing part
13: sloping portion
15: ridge portion
17: ridge portion
19: joint
20: corresponding-to-sloping-portion area
21: blank
23: blank
25: joined blank
27: electrode
29: die
31: punch
33: press-formed product (Another Embodiment 1)
35: press-formed product (Another Embodiment 2)
37: press-formed product (Another Embodiment 3)
39: press-formed product (Conventional Example)
41: ridge portion
43: crack

**Claims**

1. A press-formed product having at least a top plate portion and a vertical wall portion, comprising a main part that constitutes the top plate portion and the vertical wall portion and a reinforcing part that is disposed straddling the top plate portion and the vertical wall portion and joined to an inner side or an outer side of the main part, **characterized in that**:

   the press-formed product has a sloping portion of a planar shape between the top plate portion and the vertical wall portion on which the reinforcing part is disposed;
   a joint is provided at least in the sloping portion; and
   a width of an inner surface of the sloping portion is wider than a width of the joint.

2. A press-formed product having at least a top plate portion and a vertical wall portion, comprising a main part that constitutes the top plate portion and the vertical wall portion and a reinforcing part that is disposed straddling the top plate portion and the vertical wall portion and joined to an inner side or an outer side of the main part, **characterized in that**:

   the press-formed product has a curved sloping portion between the top plate portion and the vertical wall portion on which the reinforcing part is disposed;
   a joint is provided at least in the sloping portion;
   a width of an inner surface of the sloping portion is wider than a width of the joint; and
   a cross-sectional radius of curvature of the inner surface of the sloping portion is larger than a cross-sectional radius of curvature of a ridge portion between the top plate portion and the sloping portion and a cross-sectional radius of curvature of a ridge portion between the sloping portion and the vertical wall portion, and is 20 mm or larger.

3. The press-formed product according to claim 1 or 2, wherein the joint is formed by spot welding, arc welding, laser welding, seam welding, plasma welding, friction stir joining, or ultrasonic joining.

4. A production method of a press-formed product, **characterized in that**:

   a flat plate-shaped blank to become a main part and a flat plate-shaped blank to become a reinforcing part are placed one on top of the other and joined together at least at a portion corresponding to the sloping portion to form a joined blank; and
the joined blank is press-formed to produce the press-formed product according to claim 1 or claim 2.

5. The press-formed product according to claim 1 or 2, wherein the main part and the reinforcing part are obtained by press-forming steel sheets having a tensile strength of 980 MPa class or higher.

6. The press-formed product according to claim 3, wherein the main part and the reinforcing part are obtained by press-forming steel sheets having a tensile strength of 980 MPa class or higher.

7. The production method of the press-formed product according to claim 4, wherein the blanks of the main part and the reinforcing part are steel sheets having a tensile strength of 980 MPa class or higher.

[FIG. 1]

(a)

(b)

[FIG. 2]

[FIG. 3]

$$R_S \gg R_1$$
$$R_S \gg R_2$$

[FIG. 4]

(a)

(b)

[FIG. 5]

(a)

(b)

(c)

(d)

[FIG. 6]

(a)                                    (b)

[FIG. 7]

(a)                                    (b)

[FIG. 8]

(a)                                    (b)

[FIG. 9]

(a)

(b)

(c)

[FIG. 10]

(a)　　　　　　　　　　　(b)

[FIG. 11]

## INTERNATIONAL SEARCH REPORT

| International application No. |
| --- |
| **PCT/JP2023/034002** |

| A. | CLASSIFICATION OF SUBJECT MATTER |
| --- | --- |

*B21D 22/20*(2006.01)i
FI:   B21D22/20 G

According to International Patent Classification (IPC) or to both national classification and IPC

| B. | FIELDS SEARCHED |
| --- | --- |

Minimum documentation searched (classification system followed by classification symbols)

B21D22/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2011-37291 A (TOYOTA MOTOR CORP) 24 February 2011 (2011-02-24) paragraphs [0020]-[0031], fig. 1 | 1-2 |
| Y | | 3-7 |
| X | JP 2009-143252 A (TOYOTA MOTOR CORP) 02 July 2009 (2009-07-02) paragraphs [0024]-[0051], fig. 1-12 | 1-2 |
| Y | | 3-7 |
| Y | JP 2021-98451 A (TOYOTA TEKKO KK) 01 July 2021 (2021-07-01) paragraphs [0033]-[0038], fig. 5-6 | 4-7 |
| A | WO 2020/090916 A1 (NIPPON STEEL CORP) 07 May 2020 (2020-05-07) fig. 15 | 1-7 |

☐ Further documents are listed in the continuation of Box C.     ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **22 November 2023** | **12 December 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/034002**

| Patent document cited in search report | Publication date (day/month/year) | Patent family member(s) | Publication date (day/month/year) |
|---|---|---|---|
| JP 2011-37291 A | 24 February 2011 | (Family: none) | |
| JP 2009-143252 A | 02 July 2009 | (Family: none) | |
| JP 2021-98451 A | 01 July 2021 | (Family: none) | |
| WO 2020/090916 A1 | 07 May 2020 | US 2021/0147002 A1<br>fig. 15<br>EP 3766762 A1<br>KR 10-2021-0002735 A | |

Form PCT/ISA/210 (patent family annex) (January 2015)

**EP 4 620 591 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014087848 A